# EUROPÄISCHE PATENTSCHRIFT

(11) **EP 1 219 867 B1**
(45) Veröffentlichungstag und Bekanntmachung des Hinweises auf die Patenterteilung: **06.08.2008**
(21) Anmeldenummer: 01105527.4
(22) Anmeldetag: 06.03.2001
(51) Int. Cl.: F16H 61/02, F16H 59/00

(54) **Vorrichtung zur elektronischen Steuerung einer Getriebebaueinheit**
Electronic control unit for gearbox
Unité de commande électronique pour une boîte de vitesses

(30) Priorität: 27.12.2000 DE 10065062
(43) Veröffentlichungstag der Anmeldung: 03.07.2002
(73) Patentinhaber: Voith Turbo GmbH & Co. KG, 89522 Heidenheim (DE)
(72) Erfinder: Dietzel, Bernd, 89428 Syrgenstein (DE); Bürk, Richard, 88454 Hochdorf (DE); Ehleiter, Joachim, 89520 Heidenheim (DE)
(74) Vertreter: Dr. Weitzel & Partner

(56) Entgegenhaltungen:
- DE-A- 4 302 248
- DE-C- 19 506 296
- US-A- 5 377 111
- US-A- 5 832 401
- US-A- 5 948 033

## Beschreibung

Die Erfindung betrifft eine Vorrichtung zur Steuerung einer Getriebebaueinheit, insbesondere eines Automatgetriebes für den Einsatz in Fahrzeugen, im einzelnen mit den Merkmalen aus dem Oberbegriff des Anspruchs 1.

Vorrichtungen zur elektronischen Steuerung eines Automatgetriebes für Kraftfahrzeuge sind in einer Mehrzahl von Ausführungen bekannt. Eine gattungsgemäße Vorrichtung die alle Merkmale des Oberbegriffs des Anspruchs 1 enthält, ist in der Druckschrift DE 43 02 248/C2 beschrieben. Diese umfaßt eine, einem Automatgetriebe zugeordnete elektronische Steuereinheit, welche in einer beliebigen vorbestimmten Position im Fahrzeug angebracht ist und welche vom Gehäuse der Getriebebaueinheit entfernt angeordnet ist. Die Vorrichtung umfaßt ferner eine Eigenschaftsspeichereinheit zum Speichern herstellungsbedingter Eigenschaften steuerbarer Vorrichtungen und Bauteile des Automatgetriebes. Diese ist am Gehäuse des Automatgetriebes angeordnet und über mindestens eine Signalleitung elektrisch mit der Steuereinheit verbunden. Diese Lösung ermöglicht es dann, die herstellungsbedingten Eigenschaften der steuerbaren Vorrichtungen und Bauteile des Automatgetriebes jeder x-beliebigen gewählten Steuereinheit zuzuführen, wobei bei Auslegung der Steuervorrichtung nicht bereits auf die Zuordnungen zwischen Getriebe- und Steuereinheit geachtet werden muß, sondern diese Daten entsprechend dem Einsatzfall aus dem Eigenschaftsspeicher durch die Steuereinheit ausgelesen werden. Diese Daten werden dann von der Steuereinheit verarbeitet und zur Ansteuerung der einzelnen Getriebeelemente, insbesondere der Schaltelemente genutzt. Ein Nachteil einer derartigen Lösung besteht jedoch darin, daß hier im wesentlichen nur herstellungsbedingte Größen über den Eigenschaftsspeicher im Steuergerät zur Verfügung gestellt werden. Jeder Austausch des Steuergerätes bedingt dabei eine entsprechend diesen im Eigenschaftsspeicher hinterlegten Daten erneut erforderliche Anpassung an den konkreten Einsatzfall. Dies ist immer dann von Vorteil, wenn eine Steuereinheit durch eine Steuereinheit anderen Typs ersetzt wird, da in diesem Fall lediglich auf die, die Eigenschaften der einzelnen Bauelemente der Getriebebaueinheit charakterisierenden Größen zurückgegriffen werden muß. Da jedoch auch diese Größen ab Herstellung nicht unbedingt konstant bleiben, sondern während der Betriebsdauer eine Veränderung erfahren können, beispielsweise durch Verschleiß oder aufgrund anderer Ursachen, stehen diese geänderten Daten und die davon beeinflußbaren Daten, beispielsweise Stellgrößen zur Erzeugung einer Anpreßkraft für Schaltelemente e.t.c. nicht mehr zwangsläufig der neueingetauschten Steuereinheit zur Verarbeitung zur Verfügung. Dies bedeutet, daß eine Anpassung an das optimale Schaltverhalten durch Auswahl entsprechender Programme in der Steuereinheit der Getriebebaueinheit erst wieder erfolgen muß. Ein zeitweiliges schlechteres Schaltverhalten ist die Folge.
Im allgemeinen ist es üblich, daß Betriebsdaten oder Daten, welche sich beispielsweise durch Adaption während einer längeren Zeitdauer ändern, in der Steuereinheit abgespeichert werden. Auch diese Daten würden bei Austausch der Steuereinheit verloren gehen. Dies hätte zur Folge, daß beispielsweise bei adaptiven Schaltabläufen die bei einem derartigen Adaptionsvorgang neu gesetzten Stellgrößen für Schaltvorgänge nicht mit berücksichtigt werden können, sondern auf die ursprünglich eingestellten Werte zurückgegriffen wird, was bewirkt, daß das Schaltverhalten über eine bestimmte Zeitdauer durch ungünstige Kenngrößen charakterisiert ist, ehe diese durch die Adaption wieder neu angepaßt sind.

Ein weiterer Nachteil dieser Lösung besteht darin, daß beim Austausch einer der Getriebebaueinheit zugeordneten Steuereinheit für zeitüberspannende Beurteilungen in der Steuereinheit erfaßte Betriebsdaten ausgelesen werden müßten, was jedoch beim Defekt eines derartigen Steuergerätes in der Regel nicht mehr möglich ist, so daß diese Daten verloren gehen.

Der Erfindung liegt daher die Aufgabe zugrunde, eine Vorrichtung zur Steuerung einer Getriebebaueinheit der eingangs genannten Art derart weiterzuentwickeln, daß sichergestellt wird, daß eine Vielzahl von Daten über einen möglichst langen Zeitraum sicher aufbewahrt werden können und auch bei mehrmaligem Austausch der den Getriebebaueinheiten zugeordneten Steuergeräten eine über den Gesamtbetriebszeitraum mögliche Beurteilung der Schaltvorgänge anhand von Betriebsdaten gegeben ist.

Die erfindungsgemäße Lösung ist durch die Merkmale des Anspruchs 1 charakterisiert. Vorteilhafte Ausgestaltungen sind in den Unteransprüchen beschrieben.

Eine Vorrichtung zur elektronischen Steuerung eines Antriebsaggregates, insbesondere in Form einer Getriebebaueinheit, insbesondere eines Automatgetriebes für den Einsatz in Fahrzeugen, umfaßt eine, dem Antriebsaggregat zugeordnete und in räumlicher Entfernung oder für bestimmte Anwendungsfälle auch am Gehäuse oder im Gehäuse des Antriebsaggregates angeordnete Steuereinheit. Die Steuereinheit ist elektrisch mit einem Kennungsmodul verbunden, welcher eine dem Antriebsaggregat zugeordnete Eigenschaftsspeichereinheit zum Speichern von wenigstens herstellungsbedingten Eigenschaften steuerbarer Vorrichtungen und von Bauteilen des Antriebsaggregates umfaßt. Das Kennungsmodul ist dabei erfindungsgemäß im Antriebsaggregat angeordnet und enthält desweiteren eine Betriebs- und/oder Funktionsdatenspeichereinheit zur Speicherung aktualisierter Betriebsdaten und/oder Funktionsdaten. Eigenschaftsspeichereinheit und Betriebsund/oder Funktionsdatenspeichereinheit werden dabei vorzugsweise von einer physikalischen Speichereinheit gebildet.

Unter Antriebsaggregaten werden Einrichtungen verstanden, welche an der Kraftübertragung im Antriebsstrang beteiligt sind. Vorzugsweise wird die erfindungsgemäße Vorrichtung für ein Antriebsaggregat in Form einer Getriebebaueinheit verwendet, wobei die Getriebebaueinheit als Automatgetriebe oder automatisiertes Schaltgetriebe ausgeführt sein kann.

Unter Betriebsdaten sind dabei Daten zu verstehen, welche die Betriebsweise des Antriebsaggregates, insbesondere der Getriebebaueinheit charakterisieren. Zu diesen gehören beispielsweise die Betriebsdauer, Laufzeiten, bestimmte Drehzahlen, Wartungsdaten etc.. Unter Funktionsdaten werden Daten verstanden, welche während des Betriebes zum einen für die Gewährleistung der Funktion des Antriebsaggregates von besonderer Bedeutung sind und die eine Anpassung bezogen auf die Funktion des Antriebsaggregate erfahren können. Bei diesen handelt es sich beispielsweise um Kenndaten, die bei Adaptions-, Steuerungs- und/oder Regelungsvorgängen gebildet werden oder entstehen bzw. optimiert werden.

Eigenschaftsdaten sind Daten, welche bauartbedingt sind und in der Regel mit der Herstellung festgelegt werden. Aber auch diese können sich aufgrund von Toleranzen oder Alterungserscheinungen ändern, weshalb diese eine Anpassung während des Betriebes des Antriebsaggregates erfahren können.

Die erfindungsgemäße Lösung ermöglicht es, mit geringem Aufwand eine Möglichkeit der Betriebsdatenspeicherung unter Ausnutzung vorhandener Systeme zu realisieren, wobei das Getriebekennungssytem zur Vermeidung von Störungen durch Umwelteinflüsse im Gehäuse des Antriebsaggregates angeordnet ist. Die Speicherung aktualisierter Betriebs- und/oder Funktionsdaten ermöglicht es, insbesondere beim Ausfall der dem Antriebsaggregat zugeordneten Steuereinheit und dem Ersatz durch eine Steuereinheit gleichen oder anderen Typs bereits bei Inbetriebnahme dieser Steuereinheit, dieser die zumindest zuletzt erfaßten Betriebs- und Funktionsdaten zugrunde zu legen, welche den aktuellen Ist-Zustand beschreiben. Dabei spiegeln sich insbesondere Verschleißerscheinungen oder andere Störquellen in diesen Betriebsdaten wieder. Entsprechend den Betriebs- und/oder Funktionsdaten kann dabei die Auswahl des optimalen Schaltprogrammes erfolgen. Anpassungen dürften sich dabei lediglich im weiteren Betrieb des Antriebsaggregates ergeben.

Die Eigenschaftsspeichereinheit und die Betriebsdatenspeichereinheit sind vorzugsweise in einer Baueinheit integriert. In einer besonders kompakten Lösung werden Eigenschaftsspeichereinheit und Betriebsdatenspeichereinheit von einer physikalischen Komponente in Form eines Speichers gebildet. Dieser ist vorzugsweise als nichtflüchtiger Speicher in Form eines EEPROM ausgebildet. Zur Datenkommunikation ist lediglich eine Schnittstelle erforderlich, welche dem Speicher zugeordnet ist. Des weiteren kann dieser auch Bestandteil eines Mikrorechners sein, welcher neben der Speicherbaueinheit mindestens noch einen Mikroprozessor, insbesondere eine CPU und einen Festwertspeicher zur Speicherung von Programmen sowie einen flüchtigen Speicher umfaßt. Andere Ausführungen sind denkbar.

Im Eigenschaftsspeicher erfolgt auch eine Abspeicherung von Bauteilparametern oder Daten, die während des Betriebes des Antriebsaggregates bauteilbezogen eine Anpassung erfahren. Zu diesen gehören beispielsweise die den Verschleiß von Schaltelementen charakterisierenden Größen von Kupplungselementen in Getriebebaueinheiten oder die Kenndaten zur Charakterisierung von Alterungserscheinungen von Öl.

Die Kopplung zwischen dem Kennungsmodul und der Steuereinheit erfolgt über entsprechende Mittel zur Datenkommunikation und Datenübertragung. Die konkrete Auswahl hängt dabei von der Ausführung des Kennungsmoduls sowie dessen Anordnung im Fahrzeug ab.

Die Mittel zur Kommunikation und Datenübertragung umfassen mindestens eine serielle Schnittstelle sowie eine Versorgungsleitung. Vorzugsweise bildet die Versorgungsleitung gleichzeitig die Leitung für die Kommunikation.

Die Vorrichtung zur Steuerung des Antriebsaggregates kann mit anderen Vorrichtungen zur Steuerung von Antriebskomponenten zum Zwecke des Datenaustausches gekoppelt sein. Es besteht auch die Möglichkeit, daß diese einer zentralen Steuervorrichtung, welche beispielsweise einer Vorrichtung zur Steuerung des Fahrzeuges entspricht und die auch als zentrale Fahrsteuerung bezeichnet wird, untergeordnet ist oder aber in einer Steuervorrichtung zur Steuerung des Fahrzeuges integriert wird. Die Verbindung zu anderen Steuereinrichtungen kann dabei über ein Datenkommunikationsnetz, beispielsweise einen sogenannten CAN-Bus erfolgen.

Da in der Regel in den Antriebsaggregaten, insbesondere einer Getriebebaueinheit beziehungsweise in deren Nähe sehr hohe Temperaturen herrschen, die den Einsatz von elektronischen Bauteilen problematisch erscheinen lassen, da diese automatisch zu einer reduzierten Lebensdauer des Gesamtsystems führen können, wird das Kennungsmodul vorzugsweise nicht ständig, sondern jeweils nur kurzzeitig aktiviert, beispielsweise bei Bestromung des Steuergerätes.

Unter einem weiteren Aspekt kann bei Bedarf eine weitere Aktivierung erfolgen, wobei diese jedoch beispielsweise nur unter der Voraussetzung erfolgen wird, daß beispielsweise die Temperatur im Bereich des Kennungsmoduls bzw. bei möglicher Ableitung dieser aus einer Aggregats-, insbesondere Getriebetemperatur unterhalb eines definierten Wertes liegt. Ist die Temperatur höher, erfolgt kein Auslesen von Daten und es wird die noch im Steuergerät gespeicherte Kennung verwendet. Es erfolgt dann auch keine Aktualisierung des Betriebs- und/oder Funktionsdatenspeichers.

Ein Auslesen von Daten aus dem Kennungsmodul kann dabei
a) in vordefinierten Intervallen und/oder
b) bei Inbetriebnahme des Fahrzeuges, beispielsweise durch Einleitung des Zündvorganges oder generell bei Bestromung des Steuergerätes oder
c) bei Bedarf
   erfolgen.

Die Speicherung von Betriebs- und Funktionsdaten erfolgt bei nicht fortlaufender Aktivierung der Verbindung zwischen Kennungsmodul und Steuergerät beispielsweise gemäß einer der nachfolgend genannten Möglichkeiten:
a) in bestimmten Zeitintervallen (nach bestimmter Zeitdauer oder einer bestimmten Anzahl an Betriebsstunden)
b) bei Bedarf
c) nach Beendigung eines Fahrvorganges
d) nach Unterbrechung der Bestromung des Steuergerätes

In allen Fällen a-d werden die Daten aus der Steuereinheit ausgelesen und im Kennungsmodul gespeichert.

Da erfindungsgemäß eine Aktivierung des Eigenschaftsspeichers nur unter bestimmten Vorraussetzungen erfolgt, umfaßt die Vorrichtung ferner mindestens eine Einrichtung zur Erfassung wenigstens einer, die Aktivierung auslösenden Größe. Bei dieser Einrichtung kann es sich dabei entsprechend den oben genannten Möglichkeiten um
a) eine Einrichtung zur Erfassung wenigstens einer, den Startvorgang eines Fahrzeuges und/oder die Aktivierung der Getriebesteuereinheit wenigstens mittelbar, d. h. direkt oder indirekt charakterisierenden Größe, beispielsweise die Betätigung des Zündschlüssels,
b) eine Einrichtung zur Erfassung wenigstens einer, die Beendigung des Fahrvorganges oder Deaktivierung der Getriebesteuereinheit wenigstens indirekt beschreibenden Größe und/oder
c) eine Einrichtung zur Erfassung eines bestimmten Temperaturverhaltens des Kennungsmoduls und/oder des Antriebsaggregates, insbesondere der Getriebebaueinheit wenigstens mittelbar beschreibenden Größe handeln.

Diese Einrichtungen sind vorzugsweise in Form von Sensoren ausgeführt, mittels welchen entsprechende Signale zur Verarbeitung in der Steuereinheit generiert werden. Vorzugsweise sind diese Einrichtungen als selbständige Einheiten der Steuereinheit der Getriebebaueinheit zugeordnet und mit dieser gekoppelt, wobei über die Steuereinheit der Getriebebaueinheit die Ansteuerung einer Einrichtung zur Herstellung der Verbindung und/oder des Datenaustausches und der Kommunikation mit dem Eigenschaftsspeicher erfolgt.

In einer besonders vorteilhaften Ausgestaltung sind der Getriebesteuereinheit zwei Leitungen zugeordnet, eine erste Versorgungsleitung, welche beispielsweise mit einer Einrichtung zum Starten des Fahrzeuges wenigstens indirekt gekoppelt ist und einer zweiten sogenannten Dauerplusleitung. Die Aktivierung des Kennungsmoduls kann dabei wie folgt erfolgen: Bei Aktivierung der Zündung erfolgt eine Versorgung der Steuereinheit mit Strom über die Versorgungsleitung. Diese aktiviert die Verbindung zum Kennungsmodul, aus dem die Eigenschaftsund/oder Betriebs- und/oder Funktionsdaten ausgelesen werden. Nach erfolgtem Auslesen oder noch während dessen erfolgt eine Aktivierung der Dauerplusleitung, durch das Steuergerät. Das Steuergerät kann dabei mit einer entsprechenden Intelligenz versehen werden, so daß dieses in der Lage ist, selbsttätig innerhalb bestimmter vorgegebener Intervalle die aktuellen Eigenschafts- und/oder Betriebs- und/oder Funktionsdaten in die Eigenschafts- und/oder Betriebsdatenspeicher einzuspeichern bzw. die Speicherung auszulösen. Bei Beendigung des Fahrvorganges oder Deaktivierung der Getriebesteuerung erfolgt eine Unterbrechung der Bestromung über die Versorgungsleitung. Da die Versorgung jedoch noch über die Dauerplusleitung gewährleistet ist, kann eine Abspeicherung von Daten, auch einer größeren Datenmenge, ohne Probleme im Kennungsmodul erfolgen. Erst nach erfolgter Speicherung wird die Bestromung über die Dauerplusleitung vom Steuergerät unterbrochen.

Unter einem weiteren Aspekt der Erfindung ist es vorgesehen, daß generell in bestimmten Zeitintervallen eine Speicherung von aktuellen im Steuergerät hinterlegten Daten im Kennungsmodul erfolgt.

Des weiteren wird zur Vermeidung von Fehlern vorzugsweise eine doppelte oder mehrfache Speicherung der Daten im Kennungsmodul vorgenommen, wobei der Speicher in mindestens zwei Blöcke unterteilt wird, welche entweder mit einem Zähler für dessen Gültigkeit versehen sind oder aber generell wechselweise beschrieben werden.

Die Integration des Kennungsmoduls baulich im Antriebsaggregat bietet sich in idealer Weise an, antriebsaggregatsrelevante Betriebsdaten abzuspeichern. Die Daten können daher beim Tausch der dem Antriebsaggregat zugeordneten Steuereinheit nicht mehr verloren gehen, insbesondere kann auch ihre Zuordnung zueinander fehlerfrei beibehalten werden. In Verbindung mit dem Kennungsmodul können diese Daten jetzt tatsächlich antriebsaggregatsbezogen abgespeichert werden und bleiben auch nach einem Tausch des Steuergerätes erhalten, wobei beim Austausch des Steuergerätetyps mit diesen, während des vorherigen Betriebes bereits oftmals optimierten Daten sehr schnell die optimalen Betriebsprogramme zur Ansteuerung des Antriebsaggregates in der Steuereinheit des Antriebsaggregates festgelegt werden können. Derartige Daten sind beispielsweise die Laufleistung und Umdrehungen, Betriebsstunden, Belastungskollektive, verschleißspezifische Größen und so weiter.

Das Kennungsmodul wird vorzugsweise über eine serielle Schnittstelle mit dem Antriebsaggregat verbunden, um den Verkabelungsaufwand zu minimieren. Im einfachsten Fall kann hier ein Speicherbaustein mit bereits integrierter serieller Schnittstelle verwendet werden, so daß das gesamte Kennungsmodul beispielsweise nur aus einem Speicherbaustein und etwas zusätzlicher Elektronik besteht. Theoretisch besteht jedoch auch die Möglichkeit, das Kennungsmodul komplexer zu gestalten, wobei dieses beispielsweise einen Mikrorechner beinhaltet, in welchem ein derartiger Speicher entweder integriert ist oder mit einem derartigen Speicher verbunden wird. Als Speicher finden dabei nichtflüchtige Speicher Verwendung, beispielsweise in Form eines EEPROM, welches den Vorteil besitzt, daß sich die Speicherzellen einzeln beschreiben lassen und die gespeicherten Daten auch ohne Spannungsversorgung erhalten bleiben.

Die erfindungsgemäße Lösung eignet sich besonders für Antriebsaggregate in Form von Getriebebaueinheiten und Retardern. Insbesondere beim Einsatz in Getrieben erfolgt die Anordnung vorzugsweise im Bereich oder in der Nähe der am Gehäuse angeordneten Steckdose.

Die erfindungsgemäße Lösung wird nachfolgend anhand von Figuren erläutert. Darin ist im einzelnen folgendes dargestellt:
- Figuren 1a und 1b: verdeutlichen in stark schematisch vereinfachter Darstellung den Grundaufbau erfindungsgemäß gestalteter Vorrichtungen zur Steuerung eines Antriebsaggregates in Form einer Getriebebaueinheit;
- Figuren 2a und 2b: verdeutlichen in schematisch stark vereinfachter Darstellung den Grundaufbau erfindungsgemäß gestalteter Kennungsmodule;
- Figur 3: verdeutlicht eine besonders vorteilhafte Ausführung einer erfindungsgemäß gestalteten Vorrichtung zur Steuerung einer Getriebebaueinheit;
- Figur 4: verdeutlicht eine Ausführung eines Kennungsmoduls;
- Figuren 5a bis 5c: verdeutlichen anhand von Signalflußbildern die erfindungsgemäßen Möglichkeiten der Aktivierung eines erfindungsgemäßen Kennungsmoduls.

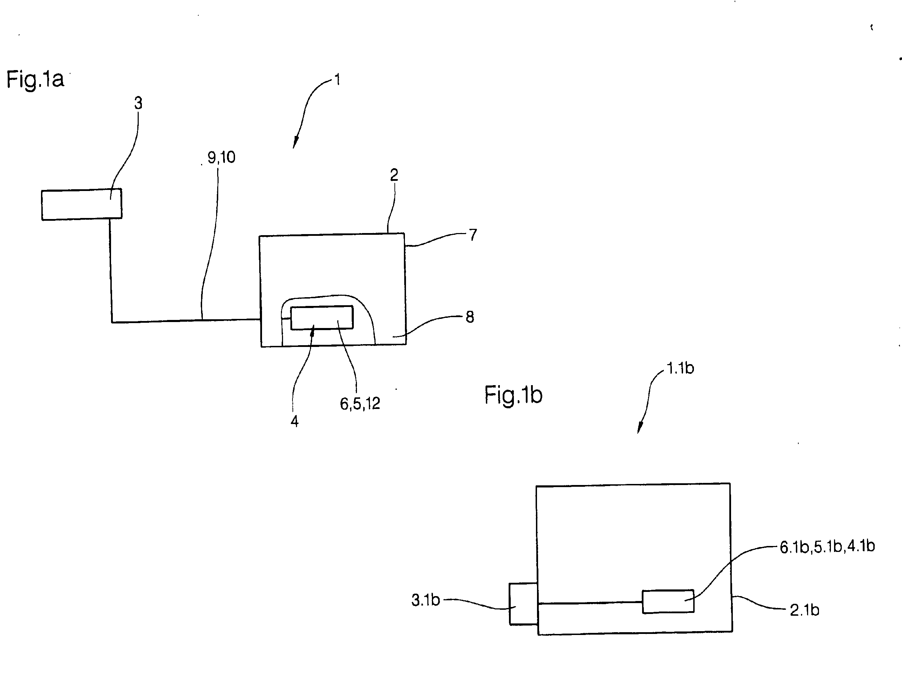

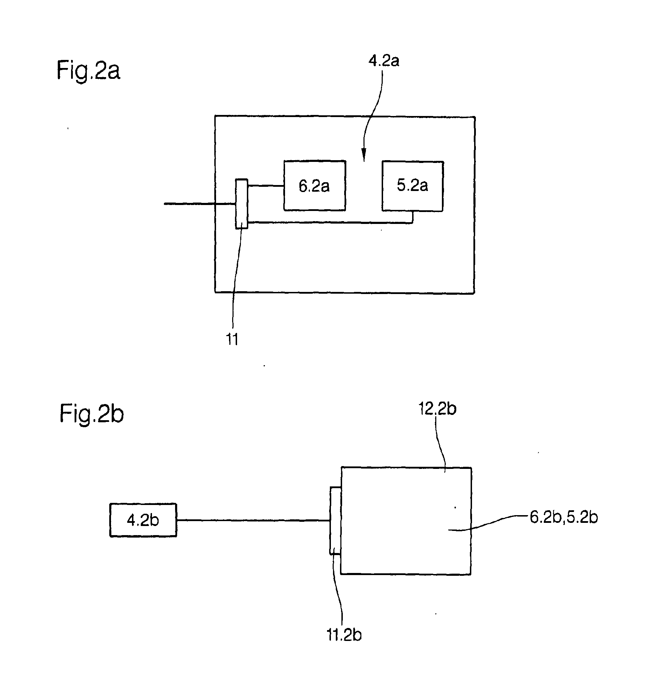

Die Figur 1a verdeutlicht in schematisch stark vereinfachter Darstellung den Grundaufbau einer erfindungsgemäß gestalteten Vorrichtung 1 zur Steuerung eines Antriebsaggregates, vorzugsweise in Form einer Getriebebaueinheit 2. Diese umfaßt eine elektronische Steuereinheit 3, welche der Getriebebaueinheit 2 zugeordnet ist und in beliebigem Abstand zu dieser im Fahrzeug angeordnet sein kann. Des weiteren umfaßt die Vorrichtung 1 einen Kennungsmodul 4 mit einer Eigenschaftsspeichereinheit 5 zum Speichern wenigstens herstellungsbedingter Eigenschaften von steuerbaren Vorrichtungen und Bauteilen der Getriebebaueinheit. Erfindungsgemäß umfaßt das Kennungsmodul 4 des weiteren eine Betriebsdatenspeichereinheit 6. Das Kennungsmodul 4 ist dabei erfindungsgemäß in der Getriebebaueinheit 2, das heißt im Getriebegehäuse 7 integriert. Die Anordnung innerhalb der Getriebebaueinheit 2 kann beliebig gewählt werden, vorzugsweise wird jedoch eine Anordnung in Einbaulage betrachtet im unteren Getriebeteil 8 und/oder in der Nähe des Kabelanschlusses am Gehäuse und in thermisch gering belasteten Bereichen erfolgen. Das Kennungsmodul 4 ist dabei mit der der Getriebebaueinheit 2 zugeordneten Steuereinheit 3 elektrisch verbunden. Diese Verbindung erfolgt über Mittel 9 zur Kommunikation und Datenübertragung. Vorzugsweise umfassen die Mittel 9 Datenübertragungsleitungen 10 und bei gewünschter serieller Datenübertragung eine serielle Schnittstelle 11. Die Eigenschaftsspeichereinheit 5 und die Betriebsdatenspeichereinheit 6 sind vorzugsweise in einer Speicherbaueinheit 12 integriert. Dabei kann die Speicherbaueinheit 12 derart konzipiert sein, das gemäß der Figur 2a die Eigenschaftsspeichereinheit 5.2a und die Betriebsdatenspeichereinheit 6.2 von unterschiedlichen Bauelementen gebildet werden, welche jeweils elektronisch mit der seriellen Schnittstelle 11 verbunden sind. Beide sind dabei vorzugsweise baulich in der Speicherbaueinheit 12.2a zusammengefaßt. Hinsichtlich der Funktion werden die Funktionen der Speicherung der herstellungsbedingten Eigenschaften steuerbarer Vorrichtungen und von Bauteilen des Automatgetriebes und der Speicherung von Betriebsdaten hier von unterschiedlichen Bauelementen übernommen.

Die Figur 2b verdeutlicht in schematisch vereinfachter Darstellung eine besonders vorteilhafte Möglichkeit der Ausführung eines Getriebekennungsmoduls 4.2b, bei welchem die Speicherbaueinheit 12.2b lediglich eine Speichereinheit umfaßt, die die Funktionen der Eigenschaftsspeichereinheit 5 und der Betriebsdatenspeichereinheit 6.2b ineinander vereint. Dabei kann diese Speichereinheit bereits die Speicherbaueinheit 12.2b in ihrer Gesamtheit bilden, es besteht jedoch auch die Möglichkeit, daß diese Speichereinheit nur Bestandteil der Speicherbaueinheit 12.2b ist. In beiden Fällen ist die die Funktion der Eigenschaftsspeichereinheit 5.2b und der Betriebsdatenspeichereinheit 6.2b übernehmende Speichereinheit mit der Steuereinheit 3.2b über eine serielle Schnittstelle 11.2b verbunden. Die serielle Schnittstelle ist dabei vorzugsweise jeweils im Bereich der Speicherbaueinheit 12.2b, vorzugsweise unmittelbar an dieser oder in dieser integriert angeordnet.

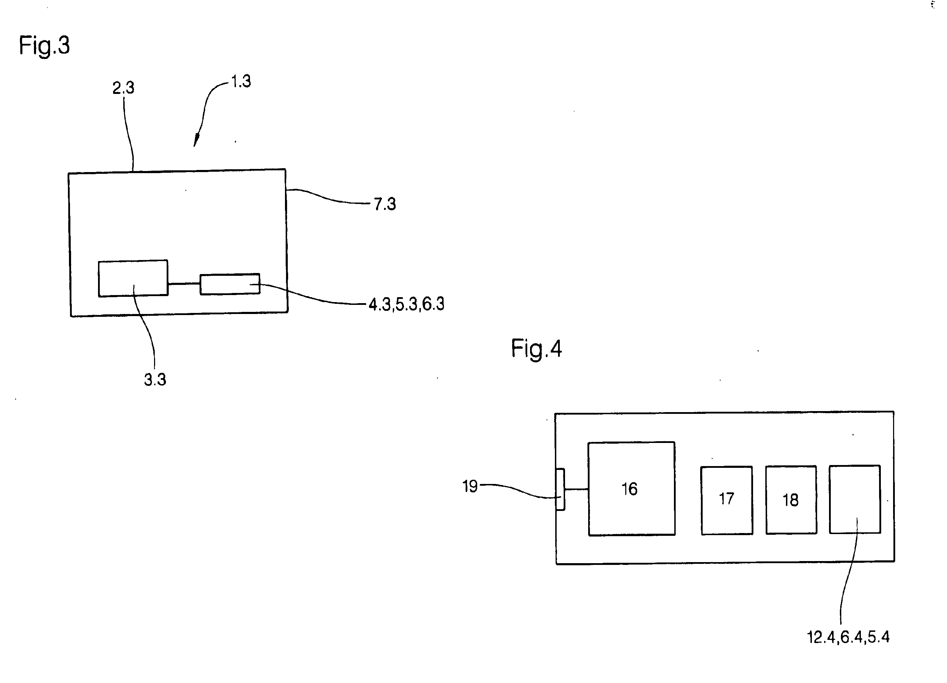

Die in den Figuren 2a und 2b beschriebenen Konfigurationen für die funktionale Aufteilung der Funktionen - Eigenschaftsspeichereinheit 5 und Betriebsdatenspeichereinheit 6 - ist für jegliche Ausführung der Anordnung des Kennungsmoduls 4 in einer Vorrichtung 1 zur Steuerung einer Getriebebaueinheit einsetzbar. Weitere Möglichkeiten sind in den Figuren 1b und 3 beschrieben. Gemäß Figur 1b ist dabei das Kennungsmodul 4.1b mit Betriebsdatenspeichereinheit 6.1b und Eigenschaftsspeichereinheit 5.1b in der Getriebebaueinheit 2.1b angeordnet, die der Getriebebaueinheit 2.1b zugeordnete Steuereinrichtung jedoch an einer Gehäuseaußenwand 13.1b der Getriebebaueinheit 2.1b. Dem gegenüber offenbart die Figur 3 eine weitere zweite Ausgestaltung, bei welcher die Steuereinheit 3.3 im Getriebegehäuse 7.3 der Getriebebaueinheit 2.3 angeordnet, das heißt in der Getriebebaueinheit 2.3 integriert ist und die Anordnung des Kennungsmoduls, insbesondere Getriebekennungsmoduls 4.3 mit Betriebsdatenspeichereinheit 6.3 und Eigenschaftsspeichereinheit 5.3 in der Getriebebaueinheit 2.3 in unmittelbarer räumlicher Nähe, vorzugsweise unmittelbar nebeneinander oder übereinander erfolgt. Bei dieser Ausführung ist der Verkabelungsaufwand zwischen Steuereinheit 3.3 und Kennungsmodul 4.3 minimal. Diese Lösung kommt bei unterschiedlichen Lieferanten von Getriebebaueinheit und Steuereinheit zum Tragen.

Bei den Ausführungen gemäß der Figuren 1a und 1b ist es jedoch erforderlich, die zur elektrischen Kopplung zwischen der Steuereinheit 3 und dem Getriebekennungsmodul 4 erforderlichen Verbindungsleitungen durch das Getriebegehäuse 7, insbesondere eine Wand des Getriebegehäuses 7.1 zu verlegen.

Für alle Ausführungen gemäß der Figuren 1 bis 3 gilt, daß das erfindungsgemäß gestaltete Kennungsmodul 4 ein baulich mit der Getriebebaueinheit 2 fest verbundenes elektronisches System darstellt, dessen wichtigste Elemente die Speichereinheiten für Betriebsdaten und die Eigenschaftsspeichereinheit 5 darstellen. Im Kennungsmodul 4 wird bei der Fertigung des Getriebes unter anderem der Getriebetyp, die Getriebebauart und die Seriennummer in codierter Form in der Eigenschaftsspeichereinheit 5 abgelegt. Dabei stellt die Eigenschaftsspeichereinheit 5 zur Speicherung herstellungsbedingter Eigenschaften steuerbarer Vorrichtungen und Bauteile des Automatgetriebes eine Art elektronisches Typenschild dar. Durch das Kennungsmodul 4 erhält dabei die Steuereinheit 3 die Möglichkeit, sich selbständig an die Bauart des Getriebes anzupassen, das heißt alle bauartspezifischen Einstellungen und Funktionen, die Auswirkungen auf das Getriebeverhalten beziehungsweise die nötige Ansteuerung der Getriebebaueinheit 2 haben, werden aus dem Kennungssystem übernommen, und es kann die entsprechende Software in der Steuereinheit 3 ausgewählt und aktiviert werden. Durch diese Lösung gelingt es, die Datensätze hinsichtlich ihrer Länge erheblich zu reduzieren. Dabei beschränkt sich der Datensatz im wesentlichen auf kundenspezifische oder fahrzeugspezifische Einstellungen. Alle bauartspezifischen Einstellungen nimmt die Steuereinheit 3 automatisch vor. Die Speicherung von aktuellen Betriebsdaten in der Betriebsdatenspeichereinheit 6 bietet die Möglichkeit, daß auch beim Austausch der Steuereinheit 3 diese Daten beziehungsweise deren Zuordnung zu einer bestimmten Getriebebaueinheit 2 nicht verloren gehen. Zu diesen Daten gehören unter anderem die Laufleistung, die Betriebsstunden, Belastungskollektive, Angaben zu den Schaltverläufen, insbesondere dem Verhalten der einzelnen an den Schaltvorgängen beteiligten Elemente und andere.

Figur 4 verdeutlicht eine weitere besonders vorteilhafte Ausgestaltung eines Kennungsmoduls, insbesondere eines Getriebekennungsmoduls 4.4. Dieses ist als komplexes System ausgeführt und umfaßt einen Mikrorechner 14, das heißt einen integrierten Schaltkreis, welcher aus einem Mikroprozessor 16 als zentrale Verarbeitungseinheit, mindestens einem Festwertspeicher 17 für die Speicherung von Programmen beziehungsweise einem Schreib-/Lesespeicher 18 für die Ablage von Daten sowie einer Schnittstelle 19 für die Kommunikation in anderen Systemen sowie den Speichern für Eigenschafts-, Betriebs-, und Funktionsdaten - Betriebs- und/oder Funktionsdatenspeichereinheit 6.4 und Eigenschaftsspeichereinheit 5.4 -, wobei die einzelnen Speichereinheiten von einem physikalischen Speicher 12.4 oder aber, hier nicht dargestellt hinsichtlich ihrer Funktion von getrennten Komponenten gebildet werden können, besteht. Die Speicherbaueinheit 12.4 ist vorzugsweise als EEPROM ausgeführt ist, welche den Vorteil besitzt, daß sich die Speicherzellen einzeln beschreiben lassen und die gespeicherten Daten auch ohne Spannungsversorgung erhalten bleiben. Dies bedeutet, daß vorzugweise nicht flüchtige Speicher verwendet werden.

Zur Realisierung der Funktionsweise wird in der Regel weitere Ansteuerelektronik benötigt, um die Datenübertragung über die Spannungsversorgungsleitungen zu ermöglichen und den Verkabelungsaufwand zu minimieren. Dies hängt jedoch vom konkret gewähltem System zur Getriebekennung ab.

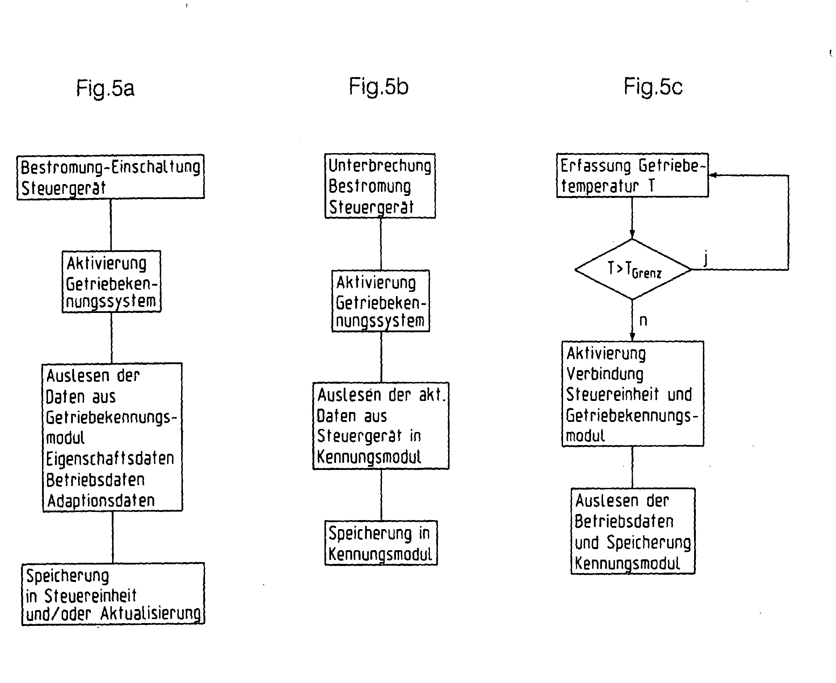

Die Figur 5a verdeutlicht anhand eines Signalflußbildes die grundlegende Funktionsweise eines erfindungsgemäß gestalteten Kennungsmoduls 4 in einer Vorrichtung 1 zur Steuerung einer Getriebebaueinheit 2. Das Kennungsmodul 4 wird dabei nur bei Bestromung des Steuergerätes, beispielsweise beim Start der Antriebsvorrichtung in einem Fahrzeug kurzzeitig aktiviert, um die Kennung durch die Getriebesteuereinheit 3 aus dem Kennungsmodul 4 auszulesen. Dazu wird die elektronische Verbindung zwischen Steuereinheit 3 und Kennungsmodul 4 aktiviert. Die Daten werden aus der Eigenschaftsspeichereinheit 5 ausgelesen, des weiteren bei Wunsch wahlweise oder aber auch immer die aktuellen Betriebsdaten aus dem Betriebsdatenspeicher 6. Diese Daten werden über die Mittel 9 an die Steuereinheit 3, welche der Getriebebaueinheit zugeordnet ist, übermittelt und in dieser verarbeitet oder entweder in einer dafür vorgesehenen oder auch zu anderen Zwecken genutzten Speichereinheit abgelegt oder lediglich unter Zwischenspeicherung oder ohne Zwischenspeicherung an ein weiteres übergeordnetes Steuersystem weitergegeben.

Zur Berücksichtigung bereits ermittelter Betriebs-und/oder Funktionsdaten für verschiedene Steuerzwecke oder auch zu Auswertzwecken werden die aktuellen Betriebs- und/oder Funktionsdaten gemäß Figur 5b bei Unterbrechung der Bestromung des Steuergerätes, beispielsweise bei Beendigung eines Fahrvorganges, das heißt bei Außerbetriebnahme der Getriebebaueinheit 2, automatisch aus der Steuereinheit ausgelesen und im Getriebekennungsmodul 4 hinterlegt. Dies erfolgt entweder in Abhängigkeit einer, auf eine gewünschte oder erfolderliche Deaktivierung der Steuereinheit und damit verbunden der Unterbrechung der Bestromung hinweisende Größe oder bei Ausführungen von Steuereinheiten mit zusätzlich zugeordneter Dauerplusleistung und Aktivierung dieser bei Inbetriebnahme der Steuereinheit zeitlich verzögert nach Unterbrechnung der Bestromung bei noch aktivierter Dauerplusleistung, d. h. mit Bereitstellung einer Nachlaufphase zur Speicherung. Über die Verbindung zwischen Steuereinheit 3 und Getriebekennungsmodul 4 werden die aktuellen Eigenschafts - und/oder Betriebs- und/oder Funktionsdaten, welche beispielsweise in einer in der Steuereinheit 3 integrierten Speichereinheit abgelegt sind, dem Betriebs- und Funktionsdatenspeicher 6 und/oder dem Eigenschaftsspeicher zugeführt und dort gespeichert.

Unter einem weiteren Aspekt der Erfindung ist es gemäß Figur 5c vorgesehen, bei Vorliegen einer auf eine sehr hohe Umgebungstemperatur für das Kennungsmodul 4 schließenden Größe ein automatisches Auslesen der aktuellen Betriebsdaten und der momentan geltenden Daten zu verhindern und diesen Vorgang nur bei niedrigeren Temperaturen zuzulassen. Dabei wird mittels mindestens einer Einrichtung zur Erfassung der Temperatur in einem oder mehreren der gedachten kritischen Bereiche am Kennungsmodul oder der Umgebung oder bei möglicher Ableitung dieser Temperaturen aus einer beliebig im Antriebsaggregat bzw. der Getriebebaueinheit ermittelten Temperatur eine, das Temperaturverhalten in diesem Bereich wenigstens mittelbar bestimmende Größe erfaßt und mit einem vorgebbaren Grenzwert T_{Grenz}verglichen. Unterschreitet dabei der aktuelle Temperatur-Istwert den vorgebbaren maximalen Temperaturgrenzwert, erfolgt automatisch eine Auslesung der aktuellen Betriebsdaten durch Aktivierung der Verbindung zwischen Steuereinheit 3 und Getriebekennungsmodul 4. Dabei wird das Kennungsmodul nur aktiviert, wenn die Getriebetemperatur unterhalb einer definierten Schwelle liegt. Liegt die Temperatur darüber, so wird von der Steuereinheit die in der Steuereinheit 3 gespeicherte Kennung verwendet. Für die Ermittlung der Temperatur wird dabei ein serienmäßig an beziehungsweise in der Getriebebaueinheit vorhandener Temperatursensor verwendet. Dies kann in Analogie auch auf die Speicherung von aktualisierten Daten im Kennungsmodul übertragen werden.

### Bezugszeichenliste

- 1, 1.1b, 1.3: Vorrichtung zur Steuerung einer Getriebebaueinheit
- 2, 2.1b, 2.3: Antriebsaggregat, Getriebebaueinheit
- 3, 3.1b, 3.3: Steuereinheit
- 4, 4.1b, 4.2a, 4.2b, 4.3, 4.4: Kennungsmodul, Getriebekennungsmodul
- 5, 5.1b, 5.2a 5.2b, 5.3, 5.4: Eigenschaftsspeichereinheit
- 6, 6.1b, 6.2a 6.2b, 6.3, 6.4: Betriebsdatenspeichereinheit
- 7, 7.1a, 7.1b, 7.3: Getriebegehäuse
- 8: unterer Getriebeteil
- 9: Mittel zur Kommunikation und Datenüberübertragung
- 10: Datenübertragungsleitungen
- 11, 11.2a, 11.2b: serielle Schnittstelle
- 12, 12.2a, 12.2b 12.4: Speicherbaueinheit
- 13, 13.1b: Gehäuseaußenwand
- 14: Mikrorechner
- 15: elektrische Kopplung
- 16: Mikroprozessor
- 17: Festwertspeicher
- 18: Schreib-/Lesespeicher
- 19: Schnittstelle

## Patentansprüche

1. Vorrichtung (1.3) zur elektronischen Steuerung einer Getriebebaueinheit (2.3), insbesondere eines Automatgetriebes für den Einsatz in Fahrzeugen,
1.1 mit einer dem Antriebsaggregat (2.3) zugeordneten Steuereinheit (3.3);
1.2 mit einem elektrisch mit der Steuereinheit (3.3) verbundenen Kennungsmodul (4,3), umfassend eine, dem Antriebsaggregat (2.3) zugeordnete Eigenschaftsspeichereinheit (5.3) zum Speichern mindestens herstellungsbedingter Eigenschaften von steuerbaren Vorrichtungen und Bauteilen des Antriebsaggregates (2.3);
1.3 das Kennungsmodul (4.3) enthält eine Betriebs- und/oder Funktionsdatenspeichereinheit (6.3) zur Speicherung aktualisierter Betriebsdaten und/oder Funktionsdaten;
1.4 die Steuereinheit (3; 3.1b; 3.3; 3.4) und das Kennungsmodul (4; 4.1b; 4.2a; 4.2b; 4.3: 4.4) sind über Mittel (9) zur Kommunikation und Datenübertragung miteinander gekoppelt;
1.5 das Kennungsmodul (4.3) ist im Antriebsaggregat (2.3), insbesondere in dessen Gehäuse angeordnet;
**gekennzeichnet durch** die folgenden Merkmale.
1.6 die Mittel (9) zur Kommunikation und Datenübertragung umfassen eine Spannungsversorgungsleitung, welche gleichzeitig die Leitung für die Kommunikation bildet;
1.7 die Eigenschaftsspeichereinheit (5; 5.1 b; 5.2a; 5.2b; 5,3; 5.4) und die Betriebs- und/oder Funktionsdatenspeichereinheit (6; 6.1b; 6.2a; 6.2b; 6.3; 6.4) sind von einer Speichereinheit (12; 12.1b; 12.2b: 12.3; 12.4) gebildet;
1.8 die Speichereinheit (12; 12.1 b; 12.2b; 12.3; 12.4) Ist von einem nichtflüchtigen Speicher, insbesondere einem EEPROM (12.4) gebildet;
1.9 das Kennungsmodul (4.4) umfasst einen Mikrorechner (14), umfassend einen Mikroprozessor (16) mit mindestens einem Festwertspeicher (17) für die Speicherung von Programmen und mindestens einem Schreib/Lesespeicher (18) für die Ablage von Daten;
1.10 mit einer Schnittstelle (19) zur Kommunikation mit anderen Systemen;
1.11 die Betriebs- und/oder Funktionsdatenspeichereinheit (6; 6.1b; 6.2a; 6.2b; 6.3; 6.4) und die Eigenschaftsspeichereinheit (5; 5.1b; 5.2a; 5.2b; 5,3; 5.4) sind im Mikrorechner (14) integriert;
1.12 die Mittel (9) umfassen eine serielle Datenübertragungs- und Kommunikationseinrichtung (11);
1.13 die Eigenschaftsspeichereinheit (5; 5.1b; 5.2a; 5.2b; 5.3; 5.4) und/oder die Betriebs- und/oder Funktionsdatenspeichereinheit (6; 6.1b; 6.2a; 6,2b; 6.3; 6.4) und die Schnittstelle (19) bilden eine bauliche Einheit.

2. Vorrichtung (1; 1.1 b; 1.3) nach Anspruch 1, **dadurch gekennzeichnet, dass** die Steuereinheit (3; 3.1 b; 3.3) des Antriebsaggregates mit einer dieser im Fahrzeug übergeordneten zentralen Steuereinrichtung koppelbar ist.

3. Vorrichtung (1; 1.1b; 1.3) nach einem der Ansprüche 1 oder 2, **dadurch gekennzeichnet, dass** die Steuereinheit (3; 3.1b; 3.3) in einer zentralen Vorrichtung zur Steuerung eines Fahrzeuges integriert ist.

4. Vorrichtung (1; 1.1b; 1.3) nach einem der Ansprüche 1 bis 3, **dadurch gekennzeichnet, dass** der Steuereinheit zwei Versorgungsleitungen zugeordnet sind - eine erste Versorgungsleitung und eine zweite Dauerplusleitung, wobei die Bestromung der Dauerplusleitung über die Steuereinheit deaktivierbar ist.

5. Vorrichtung (1; 1,1b; 1.3) nach einem der Ansprüche 1 bis 4, **gekennzeichnet durch** die folgenden Merkmale:
5.1 Betriebs- und/oder Funktionsdatenspeicher und Eigenschaftsspeicher sind in wenigstens zwei Blöcke unterteilbar;
5.2 jedem Block ist ein Zähler oder eine Kennung über dessen Gültigkeit zugeordnet.

6. Vorrichtung (1; 1.1 b; 1.3) nach einem der Ansprüche 1 bis 5, **gekennzeichnet durch** die folgenden Merkmale:
6.1 mit einem Sensor zur Erfassung wenigstens einer, den Startvorgang des Fahrzeuges wenigstens indirekt charakterisierenden Größe;
6,2 mit einer Einrichtung zur Verarbeitung der den Startvorgang des Fahrzeuges oder die Aktivierung der Steuereinheit des Antriebsaggregates wenigstens indirekt charakterisierenden Größe und Bildung einer Stellgröße zur Ansteuerung einer Einrichtung zur Aktivierung der Kommunikation und Datenübertragung zwischen der Steuereinheit (3; 3.1b; 3.3; 3.4) und dem Getriebekennungssystem (4; 4.1b; 4.2a; 4.2b; 4.3; 4.4), wobei diese von der Steuereinheit (3; 3.1b; 3.3) der Getriebebaueinheit gebildet wird.

7. Vorrichtung (1; 1.1b; 1.3) nach einem der Ansprüche 1 bis 6, **gekennzeichnet durch** die folgenden Merkmale:
7.1 mit einem Sensor zur Erfassung wenigstens einer, die Beendigung eines Fahrvorganges oder die Deaktivierung der Steuereinheit des Antriebsaggregates wenigstens mittelbar beschreibenden Größe;
7.2 mit einer Einrichtung zur Verarbeitung, der die Beendigung eines Fahrvorganges des Fahrzeuges oder die Deaktivierung der Steuereinheit des Antriebsaggregates wenigstens indirekt charakterisierenden Größe und Bildung einer Stellgröße zur Ansteuerung einer Einrichtung zur Aktivierung der Kommunikation und Datenübertragung zwischen der Steuereinheit (3; 3.1 b; 3.3; 3,4) und dem Getriebekennungssystem (4; 4.1b; 4.2a; 4.2b; 4.3; 4.4), wobei diese von der Steuereinheit (3; 3.1b; 3.3) der Getriebebaueinheit gebildet wird.

8. Vorrichtung (1; 1.1b; 1.3) nach einem der Ansprüche 1 bis 7, **gekennzeichnet durch** die folgenden Merkmale:
8.1 mit einem Sensor zur Erfassung einer, die Temperatur des Kennungsmoduls wenigstens mittelbar charakterisierenden Größe;
8.2 mit einer Einrichtung zur Verarbeitung der Temperatur des Kennungsmoduls des Fahrzeuges wenigstens indirekt charakterisierenden Größe und Bildung einer Stellgröße zur Ansteuerung einer Einrichtung zur Aktivierung der Kommunikation und Datenübertragung zwischen der Steuereinheit (3; 3.1b; 3.3; 3.4) und dem Getriebekennungssystem (4; 4,1b; 4.2a; 4.2b; 4.3; 4.4), wobei diese von der Steuereinheit (3; 3.1b; 3.3) der Getriebebaueinheit gebildet wird.

## Claims

1. An apparatus (1.3) for the electronic control of a transmission module (2.3), especially an automatic transmission for use in vehicles,
1.1. with a control unit (3.3) associated with the drive unit (2.3);
1.2. with an identifier module (4.3) which is electrically connected with the control unit (3.3) and comprises a property storage unit (5.3) associated with the drive unit (2.3) for storing at least production-related properties of controllable apparatuses and components of the drive unit (2.3);
1.3. the identifier module (4.3) comprises an operating and/or functional data storage unit (6.3) for storing updated operating data and/or functional data;
1.4. the control unit (3; 3.1 b; 3.3; 3.4) and the identifier module (4; 4.1 b; 4.2a; 4.2b; 4.3; 4.4) are coupled with each other via means (9) for communication and data transmission;
1.5. the identifier module (4.3) is arranged in the drive unit (2.3), especially in its housing;
**characterized by** the following features:
1.6. the means (9) for communication and data transmission comprise a voltage supply line which simultaneously forms the line for the communication;
1.7. the property storage unit (5; 5.1 b; 5.2a; 5.2b; 5.3; 5.4) and the operating and/or functional data storage unit (6; 6.1 b; 6.2a; 6.2b; 6.3; 6.4) are formed by a storage unit (12; 12.1 b; 12.2b; 12.3; 12.4);
1.8. the storage unit (12; 12.1 b; 12.2b; 12.3; 12.4) is formed by a non-volatile memory, especially an EEPROM (12.4);
1.9. the identifier module (4.4) comprises a microcomputer (14), comprising a microprocessor (16) with at least one read-only memory (17) for storing programs and at least one read/write memory (18) for storing data;
1.10. with an interface (19) for communication with other systems;
1.11. the operating and/or functional data storage unit (6; 6.1 b; 6.2a; 6.2b; 6.3; 6.4) and the property storage unit (5; 5.1 b; 5.2a; 5.2b; 5.3; 5.4) are integrated in the microcomputer;
1.12. the means (9) comprise a serial data transmission and communication device (11);
1.13. the property storage unit (5; 5.1 b; 5.2a; 5.2b; 5.3; 5.4) and/or the operating and/or functional data storage unit (6; 6.1 b; 6.2a; 6.2b; 6.3; 6.4) and the interface (19) form a modular unit.

2. An apparatus (1; 1.1 b; 1.3) according to claim 1, **characterized in that** the control unit (3; 3.1; 3.3) of the drive unit can be coupled with a central control device which is superimposed in the vehicle.

3. An apparatus (1; 1.1 b; 1.3) according to one of the claims 1 or 2,
**characterized in that** the control unit (3; 3.1 b; 3.3) is integrated in a central apparatus for controlling a vehicle.

4. An apparatus (1; 1.1 b; 1.3) according to one of the claims 1 to 3,
**characterized in that** the two supply lines are associated with the control unit, a first supply line and a second continuous plus line, with the current feed of the continuous plus line being capable of being deactivated via the control unit.

5. An apparatus (1; 1.1b; 1.3) according to one of the claims 1 to 4,
**characterized by** the following features:
5.1. the operating and/or functional data memory and property memory can be subdivided into at least two blocks;
5.2. each block is associated with a counter or an identifier on its validity.

6. An apparatus (1; 1.1b; 1.3) according to one of the claims 1 to 5,
**characterized by** the following features:
6.1. with a sensor for detecting at least one quantity indirectly identifying the starting process of the vehicle;
6.2. with a device for processing the quantity indirectly characterizing the starting process of the vehicle or the activation of the control unit of the drive unit and for forming a control variable for triggering a device for activating communication and data transmission between the control unit (3; 3.1 b; 3.3; 3.4) and the transmission identifier module (4; 4.1 b; 4.2a; 4.2b; 4.3; 4.4), with the same being formed by the control unit (3; 3.1 b; 3.3) of the transmission module.

7. An apparatus (1; 1.1 b; 1.3) according to one of the claims 1 to 6,
**characterized by** the following features:
7.1. with a sensor for detecting at least one quantity describing at least indirectly the termination of a driving process or the deactivation of the control unit of the drive unit;
7.2. with a device for processing the quantity describing at least indirectly the termination of a driving process or the deactivation of the control unit of the drive unit and for forming a control variable for triggering a device for activating communication and data transmission between the control unit (3; 3.1 b; 3.3; 3.4) and the transmission identifier module (4; 4.1 b; 4.2a; 4.2b; 4.3; 4.4), with the same being formed by the control unit (3; 3.1b; 3.3) of the transmission module.

8. An apparatus (1; 1.1b; 1.3) according to one of the claims 1 to 7,
**characterized by** the following features:
8.1. with a sensor for detecting a quantity characterizing at least indirectly the temperature of the identifier module;
8.2. with a device for processing the quantity characterizing at least indirectly the temperature of the identifier module of the vehicle and for forming a control variable for triggering a device for activating communication and data transmission between the control unit (3; 3.1 b; 3.3; 3.4) and the transmission identifier module (4; 4.1 b; 4.2a; 4.2b; 4.3; 4.4), with the same being formed by the control unit (3; 3.1 b; 3.3) of the transmission module.

## Revendications

1. Dispositif (1.3) pour la régulation électronique d'une unité de boîte de vitesses (2.3), en particulier d'une boîte automatique destinée à être utilisée dans des véhicules,
1.1 avec une unité de commande (3.3) associée à un groupe moteur (2.3) ;
1.2 avec un module d'identification (4.3) relié électriquement à l'unité de commande (3.3), comprenant une unité de mémoire de propriétés (5.3) associée au groupe moteur (2.3) et destinée à mémoriser au moins des propriétés liées au fabricant de dispositifs et composants contrôlables du groupe moteur (2.3) ;
1.3 le module d'identification (4.3) contient une unité de mémoire des données de fonctionnement et/ou de fonctions (6.3) destinée à mémoriser des données de fonctionnement et/ou des données de fonctions actualisées ;
1.4 l'unité de commande (3 ; 3.1 b ; 3.3 ; 3.4) et le module d'identification (4 ; 4. 1 b ; 4.2a ; 4.2b ; 4.3 ; 4.4) sont couplés ensemble par des moyens (9) de communication et de transmission de données ;
1.5 le module d'identification (4.3) est disposé dans le groupe moteur (2.3), en particulier dans son boîtier ;
**caractérisé en ce que** :
1.6 les moyens (9) de communication et de transmission de données comprennent une ligne d'alimentation électrique qui forme en même temps la ligne de communication ;
1.7 l'unité de mémoire des propriétés (5 ; 5.1 b ; 5.2a ; 5.2b ; 5.3 ; 5.4) et l'unité de mémoire des données de fonctionnement et/ou de fonctions (6 ; 6.1 b ; 6.2a ; 6.2b ; 6,3 ; 6.4) sont formées par une unité de mémoire (12 ; 12.1 b ; 12.2b; 12.3 ; 12.4) ;
1.8 l'unité de mémoire (12 ; 12.1 b ; 12.2b ; 12.3 ; 12.4) est formée par une mémoire non volatile, en particulier une EEPROM (12.4) ;
1.9 le module d'identification (4.4) comprend un microcalculateur (14), comprenant un microprocesseur (16) avec au moins une mémoire de valeurs fixes (17) pour la mémorisation de programmes et au moins une mémoire de lecture/écriture (18) pour le stockage de données ;
1.10 avec une interface (19) pour la communication avec d'autres systèmes ;
1.11 l'unité de mémoire des données de fonctionnement et/ou de fonctions (6 ; 6.1 b ; 6.2a ; 6.2b ; 6.3 ; 6.4) et l'unité de mémoire des propriétés (5 ; 5.1b ; 5.2a ; 5.2b ; 5.3; 5.4) sont intégrées dans le microcalculateur (14) ;
1.12 les moyens (9) comprennent un dispositif de transmission de données et de communication en série (11) ;
1.13 l'unité de mémoire des propriétés (5 ; 5.1 b ; 5.2a ; 5.2b ; 5.3 ; 5.4) et/ou l'unité de mémoire des données de fonctionnement et/ou de fonctions (6 ; 6.1 b ; 6.2a ; 6.2b ; 6.3 ; 6.4) et l'interface (19) forment une unité de construction.

2. Dispositif (1 ; 1.1b ; 1.3) selon la revendication 1, **caractérisé en ce que** l'unité de commande (3 ; 3.1 b ; 3.3) du groupe moteur peut être couplée à un dispositif de commande central de niveau supérieur dans le véhicule.

3. Dispositif (1 ; 1.1 b ; 1.3) selon l'une des revendications 1 ou 2, **caractérisé en ce que** l'unité de commande (3 ; 3.1 b ; 3.3) est intégrée dans un dispositif central pour la commande d'un véhicule.

4. Dispositif (1 ; 1.1b ; 1.3) selon l'une des revendications 1 à 3, **caractérisé en ce que** l'unité de commande est associée à deux lignes d'alimentation, une première ligne d'alimentation et une seconde ligne de plus permanent, le courant de la ligne de plus permanent pouvant être coupé par l'unité de commande.

5. Dispositif (1 ; 1.1 b ; 1.3) selon l'une des revendications 1 à 4, **caractérisé en ce que** :
5.1 la mémoire des données de fonctionnement et/ou de fonctions et la mémoire des propriétés peuvent être divisées en au moins deux blocs ;
5.2 chaque bloc est associé à un compteur ou à un identifiant concernant sa validité.

6. Dispositif (1 ; 1.1 b ; 1.3) selon l'une des revendications 1 à 5, **caractérisé en ce que** :
6.1 il comporte un capteur pour la détection d'au moins une grandeur caractérisant au moins indirectement l'opération de démarrage du véhicule ;
6.2 il comporte un dispositif pour traiter la grandeur caractérisant au moins indirectement l'opération de démarrage du véhicule ou l'activation de l'unité de commande du groupe moteur et pour constituer une grandeur de réglage afin d'activer un dispositif d'activation de la communication et de la transmission de données entre l'unité de commande (3 ; 3.1 b ; 3.3 ; 3.4) et le système d'identification de la transmission (4 ; 4.1 b ; 4.2a ; 4.2b ; 4.3 ; 4.4), qui est formé par l'unité de commande (3 ; 3.1 b ; 3.3) de l'unité de boîte de vitesses.

7. Dispositif (1 ; 1.1 b ; 1.3) selon l'une des revendications 1 à 6, **caractérisé en ce que** :
7.1 il comporte un capteur pour la détection d'au moins une grandeur caractérisant au moins indirectement l'arrêt de la marche du véhicule ou la désactivation de l'unité de commande du groupe moteur ;
7.2 il comporte un dispositif pour traiter la grandeur caractérisant au moins indirectement l'arrêt de la marche du véhicule ou la désactivation de l'unité de commande du groupe moteur et constituer une grandeur de réglage afin d'activer un dispositif d'activation de la communication et de la transmission de données entre l'unité de commande (3 ; 3.1b ; 3.3 ; 3.4) et le système d'identification de la transmission (4 ; 4.1 b ; 4.2a ; 4.2b ; 4.3 ; 4.4), qui est formé par l'unité de commande (3 ; 3.1 b ; 3.3) de l'unité de boîte de vitesses.

8. Dispositif (1 ; 1.1 b ; 1.3) selon l'une des revendications 1 à 7, **caractérisé en ce que**:
8.1 il comporte un capteur pour la détection d'au moins une grandeur caractérisant au moins indirectement la température du module d'identification ;
8.2 il comporte un dispositif pour traiter la grandeur caractérisant au moins indirectement la température du module d'identification et constituer une grandeur de commande afin d'activer un dispositif d'activation de la communication et de la transmission de données entre l'unité de commande (3 ; 3.1 b ; 3.3 ; 3.4) et le système d'identification de la transmission (4 ; 4.1 b ; 4.2a ; 4.2b ; 4.3 ; 4.4), qui est formé par l'unité de commande (3 ; 3.1 b ; 3.3) de l'unité de boîte de vitesses.
